# EUROPÄISCHE PATENTSCHRIFT

(11) **EP 3 362 220 B1**
(45) Veröffentlichungstag und Bekanntmachung des Hinweises auf die Patenterteilung: **03.03.2021**
(21) Anmeldenummer: 16715831.0
(22) Anmeldetag: 06.04.2016
(51) Int. Cl.: B23K 37/053

(54) **ROHRLEITUNGS-INNENZENTRIERVORRICHTUNG UND ZUGEORDNETES VERFAHREN**
INNER PIPE ALIGNMENT DEVICE AND METHOD THEREFOR
DISPOSITIF DE CENTRAGE DES TUBES ET METHODE DE MANUFACTURE D'UN TUBE

(30) Priorität: 16.10.2015 DE 102015117641; 03.03.2016 DE 102016103772
(43) Veröffentlichungstag der Anmeldung: 22.08.2018
(73) Patentinhaber: VIETZ GmbH, 30455 Hannover (DE)
(72) Erfinder: VIETZ, Alexander, 30455 Hannover (DE)
(74) Vertreter: Gramm, Lins & Partner Patent- und Rechtsanwälte PartGmbB
(86) Internationale Anmeldenummer: PCT/EP2016/057529
(87) Internationale Veröffentlichungsnummer: WO 2017/063760

(56) Entgegenhaltungen:
- EP-A2- 0 193 812
- DE-B3-102013 110 371
- US-A- 3 016 856
- US-A- 3 259 964
- US-A- 5 110 031

## Beschreibung

Die Erfindung betrifft eine Rohrleitungs-Innenzentriervorrichtung zum Zentrieren eines ersten Rohrs relativ zu einem zweiten Rohr gemäß dem Oberbegriff des Anspruchs 1 (siehe z.B. US 3,259,964). Die Anmeldung betrifft auch eine Verfahren zum Herstellen einer Rohrleitung (siehe Anspruch 10), unter Verwendung einer solchen Rohrleitungs-Innenzentriervorrichtung. Rohrleitungs-Innenzentriervorrichtungen, die beispielsweise aus der US 5,110,031, US 6,109,503, der US 3,750,928, der US 5,288,005, der EP 0 193 812, der US 3,016,856 und der US 3,561,320 bekannt sind, werden beim Rohrleitungsbau, also insbesondere auch beim Pipelinebau, verwendet. Sie dienen dazu, ein neu anzuschweißendes Rohr relativ zu dem bereits vorhandenen Abschnitt der Rohrleitung für die nachfolgende Schweißung zu zentrieren. Das Zentrieren hat den Zweck, das neu anzuschweißende Rohr so zum bereits bestehenden Abschnitt der Rohrleitung auszurichten, sodass Formabweichungen der Rohre zu einer möglichst geringen Qualitätseinbuße beim nachfolgenden Schweißen führen.

Aufgrund der Vielzahl der Schweißverbindungen, die bei einer Rohrleitung zu setzen sind, spielt die Geschwindigkeit, mit der die Schweißverbindung hergestellt werden kann, eine große Rolle bei den Kosten und der Bauzeit der Rohrleitung. Da jedoch die Qualität der Schweißnähte nicht negativ beeinflusst werden darf, konnten bislang nur relativ geringe Fortschritte bei der Produktivitätssteigerung erzielt werden.

Der Erfindung liegt die Aufgabe zugrunde, den Bau von Rohrleitungen ohne Qualitätseinbuße zu beschleunigen.

Die Erfindung löst das Problem durch eine Rohrleitungs-Innenzentriervorrichtung mit den Merkmalen von Anspruch 1. Gemäß einem zweiten Aspekt löst die Erfindung das Problem durch ein Verfahren mit den Merkmalen von Anspruch 10.

Beim Pipelinebau legt man die Rohre zunächst aus. Wenn Rohre gebogen werden sollen, so biegt man sie entsprechend. Dann verschweißt man die Rohre miteinander. Das erfolgt oft nicht parallel an allen Stößen, sondern bei einem ersten Rohr beginnend die Pipeline entlang. Die Rohrleitungs-Innenzentriervorrichtung wird dabei vorzugsweise im Rohr von Stoß zu Stoß gefahren, in geraden wie in gebogenen Rohren. Die Rohrleitungs-Innenzentriervorrichtung ist vorzugsweise so dimensioniert, dass sie Rohrbögen, die entsprechend der Norm API 5L (American Petroleum Institute; 49 CFR 192.113; Specification for Land Pipe, Stand 1. Oktober 2015) dimensioniert wurden, insbesondere hinsichtlich des Abstands der Biegeschritte und/oder des Winkels der Biegung, durchfahren kann. Insbesondere ist die Rohrleitungs-Innenzentriervorrichtung so dimensioniert, dass ein Rohr durchfahrbar ist, dessen Biegeradius zumindest das Vierzigfache des Rohrdurchmessers beträgt, wobei die Biegeschritte vorzugsweise nicht größer sind als 1,5°. Vorzugsweise ist die Rohrleitungs-Innenzentriervorrichtung ausgebildet zum Durchfahren von Rohrleitungen mit einem Durchmesser von zumindest 20 Zentimeter.

Vorteilhaft an der Erfindung ist, dass die Herstellung der Rohrleitung deutlich beschleunigt werden kann, ohne dass Qualitätseinbußen zu befürchten sind. Es hat sich nämlich herausgestellt, dass bekannte Rohrleitungs-Innenzentriervorrichtungen beim Bewegen entlang ihrer Längsachse regelmäßig um einen kleinen Winkelbetrag um diese Längsachse rotieren. Es wird angenommen, dass der Grund hierfür Imperfektion und Verunreinigungen auf der Rohrinnenseite der Rohre sind. Das Problem wird bisher dadurch behoben, dass die Rohrleitungs-Innenzentriervorrichtung unter Verwendung eines Krans teilweise aus der entstehenden Rohrleitung herausgezogen wird. Danach wird die Rohrleitungs-Innenzentriervorrichtung in ihre korrekte Betriebsstellung gebracht und in das Rohr zurückgefahren. Dieses Vorgehen ist zweitaufwändig und kann zu Beschädigungen der Rohrleitungs-Innenzentriervorrichtung führen.

Rohrleitungs-Innenzentriervorrichtungen verdrehen sich meist nicht nur beim Durchfahren von geraden Rohren, sondern insbesondere bei Rohren, die gebogen sind. Dabei dreht sie sich jedoch unweigerlich. Folgt auf dieses Rohr nun eines mit der gleichen Biegerichtung, so dreht sich die Rohrleitungs-Innenzentriervorrichtungen weiter, bis irgendwann der Längsfahrtantrieb nicht mehr ordnungsgemäß funktioniert. Die Rohrleitungs-Innenzentriervorrichtungen verklemmt sich dann oft und muss im schlimmsten Fall mit Maschinenkraft aus dem Rohr befreit werden. Die erfindungsgemäße Rohrleitungs-Innenzentriervorrichtung ermöglicht es, die Transportvorrichtung stets an der korrekten Position zu halten.

Es ist ein weiterer Vorteil, dass das Ausrichten der Rohrleitungs-Innenzentriervorrichtung mit sehr geringem technischem Aufwand möglich ist. So ist es ausreichend, einen Teil der Transportvorrichtung, mittels der die Rohrleitungs-Innenzentriervorrichtung entlang ihrer Längsachse bewegbar ist, in radialer Richtung bewegbar auszugestalten. Das kann beispielsweise mittels eines Pneumatikzylinders und/oder eines Hydraulikzylinders erfolgen, insbesondere wenn auch andere Komponenten der Rohrleitungs-Innenzentriervorrichtung pneumatisch und/oder hydraulisch betätigt werden. Die deutliche Verbesserung bei der Produktivität geht daher mit einem nur geringen zusätzlichen konstruktiven Aufwand einher.

Vorteilhaft ist zudem, dass die Qualität der Schweißverbindungen gesteigert werden kann. Dadurch, dass die Rohrleitungs-Innenzentriervorrichtung mit sehr geringem Aufwand ausgerichtet werden kann, kann das Ausrichten häufig durchgeführt werden. Die resultierende geringere mittlere Abweichung der radialen Lage der Rohrleitungs-Innenzentriervorrichtung von der vorgegebenen Betriebsstellung führt zu einer verbesserten Reproduzierbarkeit beim Setzen der Schweißnähte und damit zu einer höheren Qualität.

Im Rahmen der vorliegenden Beschreibung wird unter der Zentriereinheit insbesondere eine Vorrichtung verstanden, die mit dem ersten Rohr und dem zweiten Rohr formschlüssig verbindbar ist und die so ausgebildet ist, dass die beiden Rohre relativ zueinander zentrierbar sind. Insbesondere ist die Zentriereinheit ausgebildet zum koaxialen Ausrichten des ersten Rohrs relativ zum zweiten Rohr. Die Zentriereinheit umfasst gemäß der Erfindung einen ersten Zentrierkranz zum Einpassen in das erste Rohr und einen zweiten Zentrierkranz in das Einpassen in das zweite Rohr, wobei der erste Zentrierkranz relativ zum zweiten Zentrierkranz koaxial ausgerichtet ist. Es ist dann möglich, den ersten Zentrierkranz mit dem ersten Rohr und den zweiten Zentrierkranz mit dem zweiten Rohr zu verbinden, sodass die Rohre danach zueinander zentriert sind. Eine derartige Zentriereinheit gehört zum Stand der Technik und wird daher im Folgenden nicht näher erläutert. Es ist möglich, dass die Zentrierkränze relativ zueinander motorisch bewegbar sind.

Unter der Transportvorrichtung wird eine Vorrichtung verstanden, mittels der die Rohrleitungs-Innenzentriervorrichtung entlang der Längsachse der Rohrleitungs-Innenzentriervorrichtung automatisch bewegbar ist. Die Längsachse der Rohrleitungs- Innenzentriervorrichtung entspricht beim Betrieb der Rohrleitungs-Innenzentriervorrichtung, die auch Rohrleitungs-Innenzentrierung genannt werden kann, einer RohrLängsachse des Rohrs, in dem die Rohrleitungs-Innenzentriervorrichtung angeordnet ist. Diese Transportvorrichtung umfasst in der Regel zumindest eine Transportrolle, die Transportvorrichtung kann aber beispielsweise auch einen Raupenantrieb oder eine andere Vortriebsvorrichtung umfassen.

Unter einer Drehvorrichtung wird eine Vorrichtung verstanden, mittels der die Rohrleitungs-Innenzentriervorrichtung um ihre Längsachse drehbar ist. Selbstverständlich sind auch bekannte Rohrleitungs-Innenzentriervorrichtungen unter Anwendung eines hinreichend großen Drehmoments um ihre Längsachse drehbar, wenn das Drehmoment so groß ist, dass die Transportvorrichtung quer zu ihrer vorgesehenen Bewegungsrichtung bewegt wird. Unter einer Drehvorrichtung wird jedoch abweichend davon eine Vorrichtung verstanden, die so ausgebildet ist, dass sie eine Drehung um die Längsachse aufgrund ihrer Konstruktion ermöglicht. Insbesondere umfasst die Drehvorrichtung ein Gleitelement, beispielsweise Querrollen oder zumindest ein Gleitreibelement, das auf seine dem Rohr zugewandten Seite aus einem Material besteht, das mit Stahl einen kleinen Reibkoeffizienten hat, der beispielsweise kleiner ist als 0,1. Die Transportvorrichtung ist vorzugsweise in eine Ruhestellung, in der die Rohrleitungs-Innenzentriervorrichtung mittels der Drehvorrichtung um ihre Längsachse drehbar ist, und in eine Transportstellung, in der die Rohrleitungs-Innenzentriervorrichtung mittels der Transportvorrichtung in Längsachse bewegbar ist, bringbar ausgebildet.

Günstig ist es, wenn die Drehvorrichtung aktivierbar ist, das heißt, dass die Rohrleitungs-Innenzentriervorrichtung einen Antrieb aufweist, der in eine erste Stellung bringbar ist, in der die Rohrleitungs-Innenzentriervorrichtung mittels der Transportvorrichtung bewegbar ist, und in eine zweite Position bringbar ist, in der die Rohrleitungs-Innenzentriervorrichtung um ihre Längsachse drehbar ist. Dieser Antrieb kann auf die Drehvorrichtung wirken, das ist jedoch nicht notwendig. Gemäß einer bevorzugten Ausführungsform wirkt dieser Antrieb auf die Transportvorrichtung, wie weiter unten beschrieben wird.

Die Drehvorrichtung kann - was einen Aspekt der Erfindung darstellt - einen Drehantrieb aufweisen, mittels dem die Rohrleitungs-Innenzentriervorrichtung motorisch um ihre Längsachse drehbar ist. Der Drehantrieb kann beispielsweise einen Druckluftmotor umfassen.

Gemäß einer bevorzugten Ausführungsform umfasst die Transportvorrichtung zumindest eine Transportrolle, deren Drehachse quer zur Längsachse verläuft. Die Transportrolle ist vorzugsweise motorisch radial einwärts bewegbar. In anderen Worten kann die Transportrolle in eine Längstransportstellung, die auch Transportstellung genannt werden könnte, gebracht werden, in der sie das Gewicht der Rohrleitungs-Innenzentriervorrichtung aufnimmt, so dass diese entlang der Längsachse bewegbar ist. Die Transportrolle kann zudem in eine Ruhestellung gebracht werden, in der sie das Gewicht der Rohrleitungs-Innenzentriervorrichtung nicht trägt und eine Drehbewegung der Rohrleitungs-Innenzentriervorrichtung um die Längsachse nicht behindert. Wenn die zumindest eine Transportrolle in der Transportstellung ist, ist die Transportvorrichtung in der Transportstellung. Ist die zumindest eine Transportrolle in der Ruhestellung, ist die Transportvorrichtung auch in der Ruhestellung.

Die Transportrolle kann direkten Kontakt mit dem Rohr haben, das ist aber nicht notwendig. Insbesondere kann die Transportrolle eine Kette oder einen Gurt tragen. Die Kette oder der Gurt kann dann über eine weitere Transportrolle laufen. In anderen Worten kann die Transportrolle Teil eines Ketten- oder Gurtfahrwerks sein.

Erfindungsgemäß ist die Zentriereinheit unabhängig von der Drehvorrichtung bewegbar. Hierunter wird insbesondere verstanden, dass die Zentriereinheit sowie die Drehvorrichtung so ausgebildet sind, dass die Zentriereinheit in eine Stellung bringbar ist, in der die Rohrleitungs-Innenzentriervorrichtung um ihre Längsachse drehbar ist, ohne dass die Zentriereinheit Kontakt mit einem Rohr hat und/oder Kontakt mit dem Rohr hat, aber zumindest im Wesentlichen kein Gewicht trägt. Darunter, dass die Zentriereinheit zumindest im Wesentlichen kein Gewicht trägt, wird insbesondere verstanden, dass die Zentriereinheit weniger Gewicht trägt als die Drehvorrichtung, insbesondere weniger als ein Drittel des Gewichts, das die Drehvorrichtung trägt. Vorzugsweise ist die zudem die Transportvorrichtung unabhängig von der Drehvorrichtung bewegbar

In anderen Worten ist die Zentriereinheit vorzugsweise betätigbar, ohne dass die Drehvorrichtung bewegt wird. So ist es bevorzugt möglich, dass die Zentriereinheit in eine Stellung bringbar ist, in der sie keinen Kontakt mit den Rohren hat, wobei die Rohrleitungs-Innenzentriervorrichtung dann mittels der Drehvorrichtung drehbar ist oder mittels der Transportvorrichtung bewegbar ist.

Vorzugsweise besitzt die Rohrleitungs-Innenzentriervorrichtung einen Grundkörper, wobei die Drehvorrichtung starr am Grundkörper befestigt ist. In diesem Fall kann die Transportvorrichtung und/oder die Zentriereinheit ein- und ausfahrbar ausgebildet sein, sodass die Rohrleitungs-Innenzentriervorrichtung dadurch drehbar ist, dass die Transportvorrichtung und/oder die Zentriereinheit eingefahren werden. Ist die Transportvorrichtung oder ist die Zentriereinheit ausgefahren, so ist die Rohrleitungs-Innenzentriervorrichtung nicht mittels der Drehvorrichtung drehbar.

Gemäß der Erfindung ist die Drehvorrichtung unabhängig von der Zentriereinheit bewegbar. In diesem Fall können beispielsweise Querrollen der Zentriereinheit radial ein- und/oder auswärts bewegt werden, ohne dass die Zentriereinheit betätigt werden muss.

Günstig ist es, wenn die Transportvorrichtung einen Antrieb aufweist, mittels dem die zumindest eine Transportrolle radial einwärts und radial auswärts bewegbar ist. Unter dem Merkmal, dass die zumindest eine Transportrolle radial einwärts bewegbar ist, wird insbesondere verstanden, dass die Bewegung zumindest auch eine radiale Komponente aufweist. Es ist möglich, dass die Transportrolle bei ihrer radialen Einwärtsbewegung sich simultan in Umfangsrichtung bewegt.

Vorzugsweise ist die Transportrolle unterhalb eines Schwerpunkts der Rohrleitungs-Innenzentriervorrichtung angeordnet. Hierunter wird insbesondere verstanden, dass eine Schwerpunktebene, die lotrecht verläuft und in welcher der Schwerpunkt der Rohrleitungs-Innenzentriervorrichtung liegt, durch die zumindest eine Transportrolle verläuft. Es ist dabei vorteilhaft, nicht aber notwendig, dass diese Schwerpunktebene durch alle Transportrollen verläuft. Wenn die Transportrolle unterhalb des Schwerpunkts angeordnet ist, kann sie besonders einfach so bewegt werden, dass die Drehvorrichtung aktiviert wird.

Unter dem Merkmal, dass Transportrolle unterhalb eines Schwerpunkts der Rohrleitungs-Innenzentriervorrichtung angeordnet ist, wird insbesondere verstanden, dass zumindest eine Tragrolle existiert, für die gilt, dass ein Winkel zwischen einer Strecke vom Schwerpunkt zum Kontaktpunkt zwischen der Tragrolle und der Rohrinnenwand einerseits und der Vertikalen andererseits höchstens 30° beträgt.

Günstig ist es, wenn die Transportrolle pneumatisch radial bewegbar ist. Viele Rohrleitungs-Innenzentriervorrichtungen besitzen pneumatische Antriebe. Es kann daher eine ohnehin vorhandene Druckluftquelle genutzt werden, um den Antrieb für die Transportrolle mit Druckluft zu versorgen.

Günstig ist es, wenn die Drehvorrichtung zumindest drei, insbesondere zumindest vier, Querrollen aufweist, deren Drehachsen sich entlang der Längsachse der Rohrleitungs-Innenzentriervorrichtung erstrecken. Unter dem Merkmal, dass sich die Drehachsen entlang der Längsachse erstrecken, wird insbesondere verstanden, dass es vorteilhaft ist, wenn der Winkel zwischen Drehachsen und Längsachse möglichst klein ist, dass aber Abweichungen möglich sind. Vorzugsweise sind die Winkel zwischen den Drehachsen und der Längsachse kleiner als 10°, insbesondere 5°. Selbstverständlich ist es möglich, dass jede der Drehachsen einen anderen Winkel mit der Längsachse einschließt. Eine derartige Drehvorrichtung ist besonders einfach aufgebaut und robust, so dass sie auch unter den oftmals harschen Bedingungen auf Baustellen sicher funktionieren.

Es ist möglich und stellt eine bevorzugte Ausführungsform dar, dass die Querrollen relativ zueinander fixiert sind und beispielsweise an einem gemeinsamen Rahmen befestigt sind. Günstig ist es, wenn die Querrollen radial unbeweglich montiert sind und kollektiv einen Außenkreis besitzen.

Vorzugsweise umfasst die Drehvorrichtung einen Antrieb, mittels dem zumindest ein Teil der Querrollen automatisch radial einwärts und auswärts bewegbar ist. In diesem Fall kann die zumindest eine Transportrolle unten an der Rohrleitungs-Innenzentriervorrichtung angeordnet sein. Ist die zumindest eine Transportrolle eingefahren, ruht die Rohrleitungs-Innenzentriervorrichtung auf den Querrollen. Ist die zumindest eine Transportrolle ausgefahren, ruht die Rohrleitungs-Innenzentriervorrichtung darauf und kann bewegt werden.

Vorzugsweise ist die Transportrolle, insbesondere motorisch, in eine Transportstellung, in der sie zumindest teilweise über den Außenkreis hinausragt, und in eine Ruhestellung, in der sie vollständig innerhalb des Außenkreises angeordnet ist, bringbar. Der Außenkreis ist derjenige gedachte Kreis minimalen Durchmessers, der die Transportrollen radial außen umgibt und keine der Transportrollen schneidet. Der Außenkreisdurchmesser entspricht somit dem Innendurchmesser des kleinstmöglichen Rohres, in dem die Rohrleitungs-Innenzentriervorrichtung angeordnet werden kann, wenn die zumindest eine Transportrolle in ihrer Ruhestellung ist.

Vorzugsweise ist die zumindest eine Transportrolle von dem in Längsrichtung vorderen Ende der Rohrleitungs-Innenzentriervorrichtung so weit beabstandet, dass die Rohrleitungs-Innenzentriervorrichtung von Hand drehbar ist. Dazu kann das vordere Ende gegriffen und gedreht werden. Vorzugsweise ist die Drehvorrichtung so ausgebildet, dass ein Drehmoment, das zum Drehen der Rohrleitungs-Innenzentriervorrichtung notwendig ist, bei aktivierter Drehvorrichtung und/oder dann, wenn die Transportvorrichtung in Ruhestellung ist, höchstens 250 Newtonmeter beträgt.

Vorzugsweise liegt ein Schwerpunkt der Rohrleitungs-Innenzentriervorrichtung in ihrer Betriebsstellung unterhalb eines Außenkreis-Mittelpunkts des Außenkreises der Transportvorrichtung. Das erleichtert es, die Rohrleitungs-Innenzentriervorrichtung in ihre ausgerichtete Position zu bringen. Insbesondere ist es günstig, wenn die Drehvorrichtung so leichtgängig ausgebildet ist, dass sich die Rohrleitungs-Innenzentriervorrichtung beim Aktivieren der Drehvorrichtung zumindest teilweise selbsttätig in die ausgerichtete Position bewegt.

Im Folgenden wird die Erfindung anhand der beigefügten Zeichnungen näher erläutert. Dabei zeigt
- Figur 1a: eine Ausführungsform einer erfindungsgemäßen Rohrleitungs-Innenzentriervorrichtung mit aktivierter Drehvorrichtung,
- Figur 1b: einen Längsschnitt entlang A-A durch die Rohrleitungs-Innenzentriervorrichtung gemäß Figur 1a mit inaktiver Drehvorrichtung und aktiver Transportvorrichtung,
- Figur 1c: den Längsschnitt gemäß Figur 1b mit aktiver Drehvorrichtung und inaktiver Transportvorrichtung,
- Figur 1d: eine schematische Ansicht der Lage der Schwer- und Mittelpunkte von Bestandteilen der Rohrleitungs-Innenzentriervorrichtung und
- Figur 2: eine perspektivische, maßstabsgetreue Darstellung der Rohrleitungs-Innenzentriervorrichtung.

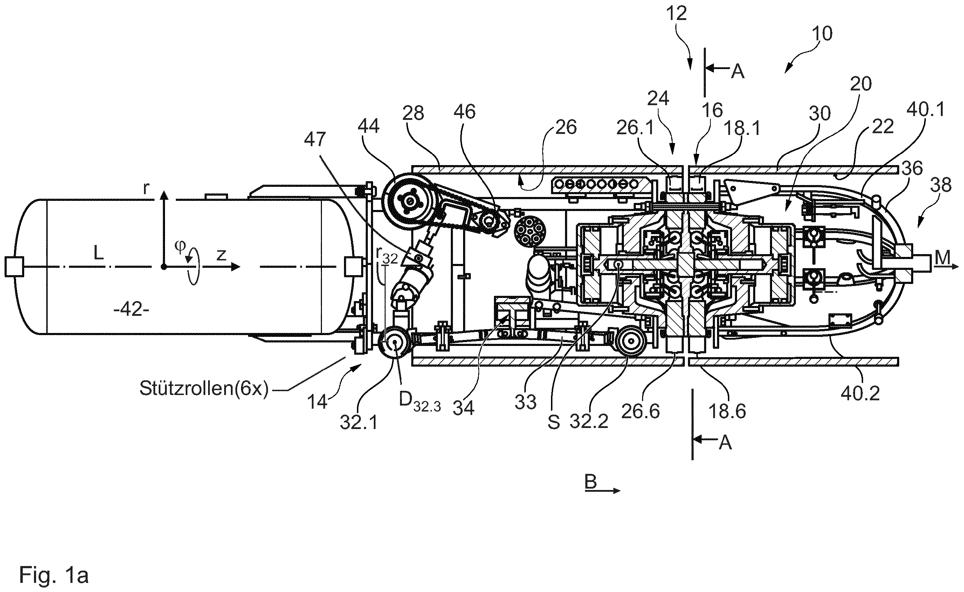

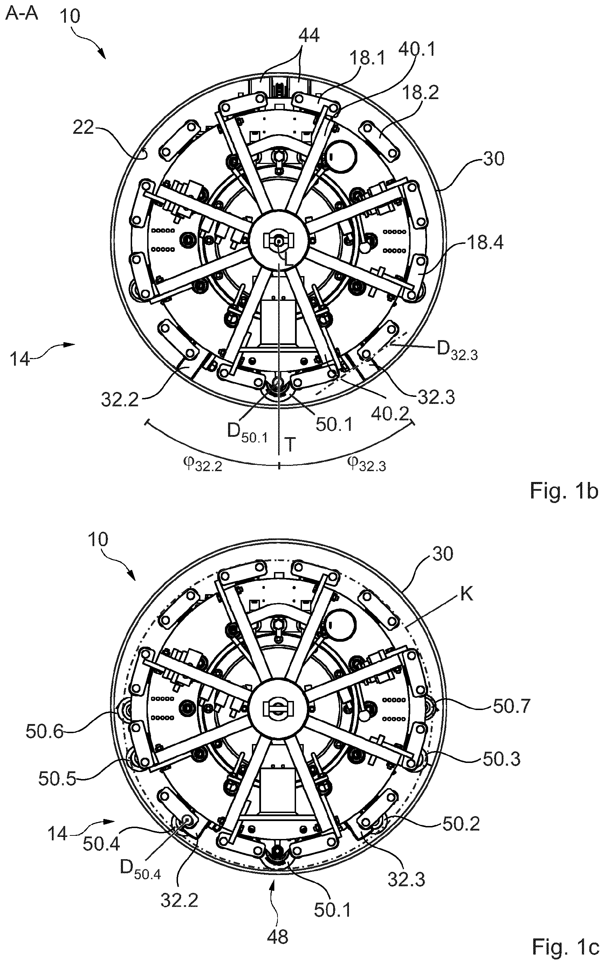

Figur 1a zeigt eine erfindungsgemäße Rohrleitungs-Innenzentriervorrichtung 10, die eine Zentriereinheit 12 und eine Transportvorrichtung 14 aufweist. Die Zentriereinheit 12 umfasst einen ersten Zentrierkranz 16, der eine Mehrzahl an Spannelementen 18.1, 18.2, ... umfasst (siehe Figur 1b). Die Spannelemente 18 (Bezugszeichen ohne Zählsuffix beziehen sich jeweils auf alle entsprechenden Objekte) können von einem Spannantrieb 20 radial auswärts gedrückt werden.

Die Zentriereinheit 12 besitzt gemäß der Erfindung zudem einen zweiten Zentrierkranz 24, der Spannelemente 26.1, ... aufweist, die ebenfalls mittels des Spannantriebs 20 nach radial außen bewegbar sind. Durch betätigen des Spannantriebs 20 kann die Rohrleitungs-Innenzentriervorrichtung 10 damit an einer Innenoberfläche 26 eines ersten Rohrs 28 fixiert werden. Unabhängig davon kann die Rohrleitungs-Innenzentriervorrichtung 10 mittels des ersten Zentrierkranzes 16 an der Innenoberfläche 22 eines zweiten Rohrs 30 fixiert werden. Die beiden Zentrierkränze 16, 24 sind koaxial angeordnet. Mittels der Rohrleitungs-Innenzentriervorrichtung 10 können daher das erste Rohr 28 und das zweite Rohr 30 relativ zueinander koaxial ausgerichtet werden.

Die Transportvorrichtung 14 umfasst eine erste Transportrolle 32.1 und eine zweite Transportrolle 32.2, die an einem Laufwerk 33 befestigt sind und deren radialer Abstand r32 zu einer Längsachse L durch einen Antrieb 34 veränderbar ist. Der Antrieb 34 ist im vorliegenden Fall durch einen Pneumatikzylinder gebildet. Figur 1a zeigt die Transportvorrichtung 14 in ihrer Transportstellung, in der die Transportrollen 32 den maximalen radialen Abstand von der Längsachse L haben.

Die Rohrleitungs-Innenzentriervorrichtung 10 besitzt einen Schwerpunkt S, der oberhalb der Transportrolle 32.2 angeordnet ist.

Figur 1a zeigt zudem, dass die Rohrleitungs-Innenzentriervorrichtung 10 einen Frontkäfig 36 besitzt, der an einem in einer Bearbeitungsrichtung B vorderen Ende 38 angeordnet ist. Der Frontkäfig 36 besitzt mehrere Holme 40.1, 40.2, ..., die mit der Hand ergriffen werden können, um ein Drehmoment M für eine Drehung um die Längsachse L aufzubringen. Figur 1a zeigt zudem einen Druckgasspeicher 42, in dem im vorliegenden Fall Druckluft zum Betätigen insbesondere des Antriebs 34 sowie des Spannantriebs 20 vorgehalten wird.

Figur 1b zeigt einen Querschnitt entlang der Linie A-A gemäß Figur 1a. Es ist zu erkennen, dass die Transportvorrichtung 14 eine dritte Transportrolle 32.3 aufweist. Die Transportrollen 32.2, 32.3 sind in gleichen Winkelabständen zu einem Lot T angeordnet. In anderen Worten sind die Winkel ϕ_{32.2} und ϕ_{32.3} betragsmäßig im technischen Sinne gleich groß, das heißt, dass Abweichungen von der mathematischen Gleichheit zwar möglich, nicht aber erwünscht sind.

Figur 1b zeigt, dass die Transportvorrichtung 14 zudem eine Antriebsrolle 44 besitzt, mittels der die Rohrleitungs-Innenzentriervorrichtung 10 entlang der Längsachse L (vgl. Figur 1a) bewegt werden kann. Figur 1a zeigt einen Vortriebsmotor 46, der, im vorliegenden Fall mittels eines Kettentriebs, mit der Antriebsrolle 44 zum Antreiben gekoppelt ist. Die Antriebsrolle 44 kann mittels eines Stellantriebs 47 gegen die Innenoberfläche 26 (siehe Figur 1a) gedrückt und radial einwärts gefahren werden.

In der in Figur 1b gezeigten Stellung haben die Spannelemente 18 keinen Kontakt zur Innenoberfläche 22. Die Transportvorrichtung 14 ist in der Transportstellung, da die Transportrollen 32 und die Antriebsrolle in ihren Transportstellung sind. Die Rohrleitungs-Innenzentriervorrichtung 10 ist daher mittels der Transportvorrichtung 14 entlang der Längsachse L bewegbar. In der Transportstellung trägt die zumindest eine Transportrolle 32.2, 32.3 die Gewichtskraft der Rohrleitungs-Innenzentriervorrichtung 10. Figur 1c zeigt die Rohrleitungs-Innenzentriervorrichtung 10 gemäß Figur 1b, bei der die Transportvorrichtung 14 in ihrer Ruhestellung ist. Die Transportrollen 32 haben einen so kleinen radialen Abstand von dem Mittelpunkt des Rohrs 30, dass sie keine Gewichtskraft mehr aufnehmen. Stattdessen ruht die Rohrleitungs-Innenzentriervorrichtung 10 auf einer Drehvorrichtung 48, die Querrollen 50.1, 50.2, ... umfasst.

Jede Querrolle 50 besitzt eine Drehachse D5o, die zumindest in guter Näherung parallel zur Längsachse L verläuft. Ist die Transportvorrichtung 14 in ihrer Ruhestellung, kann daher die Rohrleitungs-Innenzentriervorrichtung 10 auf den Querrollen 50 leicht um ihre Längsachse L gedreht werden.

Die Querrollen 50 sind radial unbeweglich montiert und haben kollektiv einen Außenkreis K. Ist die Transportvorrichtung 14, wie in Figur 1b gezeigt, in ihrer Transportstellung, so ragen die Transportrollen 32 über diesen Außenkreis K hinaus. Ist die Transportvorrichtung 14, wie in Figur 1c gezeigt, in der Ruhestellung, sind sie vollständig innerhalb des Außenkreises K angeordnet.

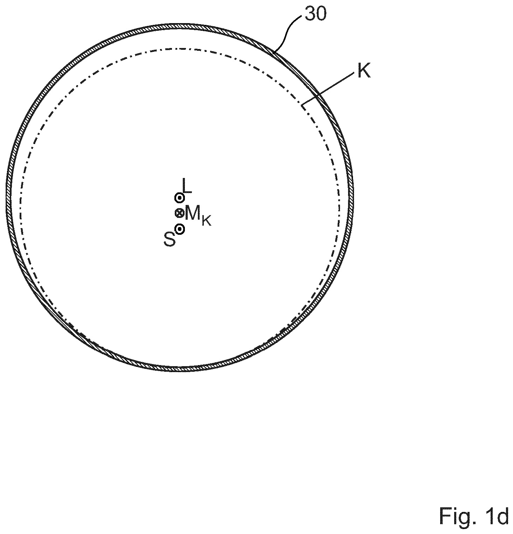

Figur 1d zeigt die Lage des Außenkreis-Mittelpunkts M_{K} des Außenkreises K und den Schwerpunkt S der Rohrleitungs-Innenzentriervorrichtung 10.

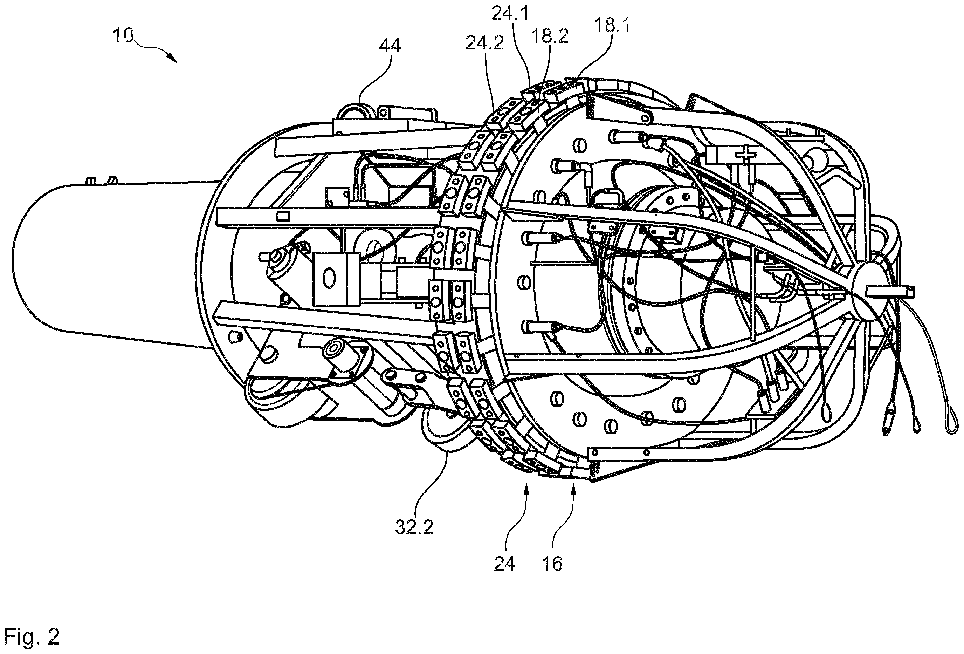

Figur 2 zeigt eine perspektivische Ansicht der Rohrleitungs-Innenzentriervorrichtung 10.

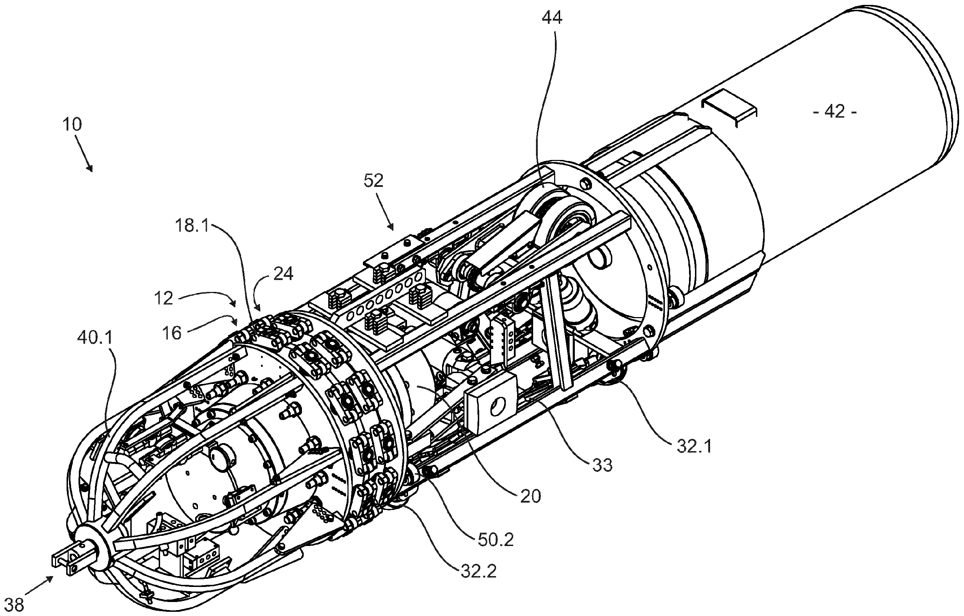

Figur 3 zeigt eine weitere perspektivische Ansicht einer erfindungsgemäßen Rohrleitungs-Innenzentriervorrichtung 10, die einen Grundkörper 52 aufweist, an dem die Drehvorrichtung 48 starr befestigt ist. Selbstverständlich können sich die Querrollen 50 weiter drehen, eine radiale Ein- oder Auswärtsbewegung ist aber nicht möglich. Die Transportrollen 32 sind hingegen relativ zum Grundkörper 52 ein- und ausfahrbar.

**Bezugszeichenliste**

| | | | |
|---|---|---|---|
| 10 | Rohrleitungs-Innenzentriervorrichtung | 38 | vorderes Ende |
| | | 40 | Holm |
| 12 | Zentriereinheit | 42 | Druckgasspeicher |
| 14 | Transportvorrichtung | 44 | Antriebsrolle |
| 16 | Zentrierkranz | 46 | Vortriebsmotor |
| 18 | Spannelement | 47 | Stellantrieb |
| | | 48 | Drehvorrichtung |
| 20 | Spannantrieb | | |
| 22 | Innenoberfläche | 50 | Querrolle |
| 24 | zweiter Zentrierkranz | 52 | Grundkörper |
| 26 | Innenoberfläche | | |
| 28 | erstes Rohr | d | Überstand |
| | | Es | Schwerpunktebene |
| 30 | zweites Rohr | K | Außenkreis |
| 32 | Transportrolle | L | Längsachse |
| 33 | Laufwerk | M | Drehmoment |
| 34 | Antrieb | S | Schwerpunkt |
| 36 | Frontkäfig | T | Lot |

## Patentansprüche

1. Rohrleitungs-Innenzentriervorrichtung zum Zentrieren eines ersten Rohrs (28) relativ zu einem zweiten Rohr (30), mit
(a) einer Zentriereinheit (12) zum Ausrichten des zweiten Rohrs (30) relativ zum ersten Rohr (28), die
- einen ersten Zentrierkranz (16) zum Einpassen in das erste Rohr (28) und
- einen zweiten Zentrierkranz (24) in das Einpassen in das zweite Rohr (28), wobei der erste Zentrierkranz (16) relativ zum zweiten Zentrierkranz (24) koaxial ausgerichtet ist,
aufweist,
(b) einer Transportvorrichtung (14) zum Bewegen im Rohr (28) entlang einer Längsachse (L) der Rohrleitungs-Innenzentriervorrichtung (10)
und **gekennzeichnet durch**:
(c) eine Drehvorrichtung (48) mittels der die Rohrleitungs-Innenzentriervorrichtung (10) um ihre Längsachse (L) drehbar ist, wobei die Zentriereinheit (12) unabhängig von der Drehvorrichtung (48) bewegbar ist.

2. Rohrleitungs-Innenzentriervorrichtung nach Anspruch 1, **gekennzeichnet durch**
- einen Grundkörper,
- wobei die Drehvorrichtung (48) starr am Grundkörper befestigt ist.

3. Rohrleitungs-Innenzentriervorrichtung nach einem der vorstehenden Ansprüche, **dadurch gekennzeichnet, dass** die Transportvorrichtung (14) zumindest eine Transportrolle (32) aufweist,
- deren Drehachse (D₃₂) quer zur Längsachse (L) verläuft und
- motorisch radial einwärts bewegbar ist.

4. Rohrleitungs-Innenzentriervorrichtung nach Anspruch 2, **dadurch gekennzeichnet, dass** die zumindest eine Transportrolle (32) unterhalb eines Schwerpunkts (S) der Rohrleitungs-Innenzentriervorrichtung (10) angeordnet ist.

5. Rohrleitungs-Innenzentriervorrichtung nach Anspruch 2 oder 4, **dadurch gekennzeichnet, dass** die zumindest eine Transportrolle (32) pneumatisch und/oder hydraulisch radial bewegbar ist.

6. Rohrleitungs-Innenzentriervorrichtung nach einem der vorstehenden Ansprüche, **dadurch gekennzeichnet, dass** die Drehvorrichtung (48) zumindest drei, insbesondere zumindest vier, Querrollen (50) aufweist, deren Drehachsen (D₅₀) sich entlang der Längsachse (L) erstrecken.

7. Rohrleitungs-Innenzentriervorrichtung nach Anspruch 6, **dadurch gekennzeichnet, dass**
(a) Querrollen (50) radial unbeweglich montiert sind und kollektiv einen Außenkreis (K) besitzen und
(b) zumindest eine der zumindest einen Transportrolle (32), insbesondere motorisch in
- eine Transportstellung, in der sie zumindest teilweise über den Außenkreis (K) hinausragt, und
- eine Ruhestellung, in der sie vollständig innerhalb des Außenkreises (K) angeordnet ist, bringbar ist.

8. Rohrleitungs-Innenzentriervorrichtung nach einem der vorstehenden Ansprüche 2 bis 7, **dadurch gekennzeichnet, dass** die zumindest eine Transportrolle (32) von einem in Längsrichtung (L) vorderen Ende der Rohrleitungs-Innenzentriervorrichtung (10) so weit beabstandet ist, dass die Rohrleitungs-Innenzentriervorrichtung (10) von Hand drehbar ist.

9. Rohrleitungs-Innenzentriervorrichtung nach einem der vorstehenden Ansprüche, **dadurch gekennzeichnet, dass**
ein Schwerpunkt (S) der Rohrleitungs-Innenzentriervorrichtung (10) in ihrer Betriebsstellung unterhalb eines Außenkreis-Mittelpunkts (M_{K}) des Außenkreises (K) der Transportvorrichtung (14) liegt.

10. Verfahren zum Herstellen einer Rohrleitung, mit den Schritten:
(i) Zentrieren eines ersten Rohrs (28) relativ zu einem zweiten Rohr (30) mittels einer Rohrleitungs-Innenzentriervorrichtung (10) nach einem der vorstehenden Ansprüche,
(ii) Verschweißen des zweiten Rohrs (30) mit dem ersten Rohr (28),
(iii) Bewegen der Rohrleitungs-Innenzentriervorrichtung (10) entlang ihrer Längsachse (L) mittels der Transportvorrichtung (14),
(iv) Aktivieren der Drehvorrichtung (48),
(v) Ausrichten der Rohrleitungs-Innenzentriervorrichtung (10) durch Drehen um ihre Längsachse (L) und
(vi) Deaktivieren der Drehvorrichtung (48).

11. Verfahren nach Anspruch 10, **dadurch gekennzeichnet, dass** das Drehen der Rohrleitungs-Innenzentriervorrichtung (10) per Hand erfolgt.

## Claims

1. Pipeline internal centering device for centering a first pipe (28) relative to a second pipe (30), with
(a) a centering unit (12) for aligning the second pipe (30) relative to the first pipe (28), the centering unit (12) comprising
- a first centering ring (16) to be fixed into the first pipe (28) and
- a second centering ring (24) to be fixed into a second pipe (28), wherein the first centering ring (16) is coaxially aligned to the second centering ring (24),
(b) a transport device (14) for moving it along a longitudinal axis (L) of the pipeline internal centering device (10),
and **characterised by**:
(c) a rotary device (48) by means of which the pipeline internal centering device (10) can be rotated about its longitudinal axis (L), wherein the centering unit (12) can be moved independently of the rotary device (48).

2. Pipeline internal centering device according to claim 1 or 1(c), **characterised by**
- a base body,
- wherein the rotary device (48) is rigidly attached to the base body.

3. Pipeline internal centering device according to one of the above claims, **characterised by** the fact that the transport device (14) comprises at least one transport roller (32),
- whose rotational axis (D₃₂) runs transversely to the longitudinal axis (L) and
- can be moved radially inwards by way of a motor.

4. Pipeline internal centering device according to claim 2, **characterised by** the fact that the at least one transport roller (32) is arranged below a centre of gravity (S) of the pipeline internal centering device (10).

5. Pipeline internal centering device according to claim 2 or 4, **characterised by** the fact that the at least one transport roller (32) can be pneumatically and/or hydraulically moved in the radial direction.

6. Pipeline internal centering device according to one of the above claims, **characterised by** the fact that the rotary device (48) comprises at least three, in particular at least four transverse rollers (50), whose rotational axes (D₅₀) extend along the longitudinal axis (L).

7. Pipeline internal centering device according to claim 6, **characterised by** the fact that
(a) transverse rollers (50) are assembled such that they are radially immovable and collectively have an outer ring (K), and
(b) at least one transport roller (32) can be moved, in particular by means of a motor,
- into a transport position in which it at least partially protrudes above the outer ring (K), and
- into a neutral position in which it is arranged entirely within the outer ring (K).

8. Pipeline internal centering device according to one of the above claims 2 to 7, **characterised by** the fact that the at least one transport roller (32) is located at such a distance from a front end - in the longitudinal direction - of the pipeline internal centering device (10) that the pipeline internal centering device (10) can be rotated manually.

9. Pipeline internal centering device according to one of the above claims, **characterised by** the fact that
a centre of gravity (S) of the pipeline internal centering device (10) lies below a centre point (M_{K}) of the outer ring (K) of the transport device (14) when in the operating position.

10. Method for producing a pipeline comprising the steps:
(i) centering of a first pipe (28) relative to a second pipe (30) by means of a pipeline internal centering device (10) according to one of the above claims,
(ii) welding of the second pipe (30) with the first pipe (28),
(iii) movement of the pipeline internal centering device (10) along its longitudinal axis (L) by means of the transport device,
(iv) activation of the rotary device (48),
(v) alignment of the pipeline internal centering device (10) by rotating it about its longitudinal axis (L), and
(vi) deactivation of the rotary device (48).

11. Method according to claim 10, **characterised by** that fact that the rotation of the pipeline internal centering device (10) is conducted manually.

## Revendications

1. Dispositif de centrage interne de conduit pour centrer un premier tube (28) par rapport à un second tube (30), comprenant
(a) une unité de centrage (12) pour orienter le second tube (30) par rapport au premier tube (28), qui comprend
- une première couronne de centrage (16) pour l'adaptation dans le premier tube (28), et
- une seconde couronne de centrage (24) pour l'adaptation dans le second tube (28), la première couronne de centrage (16) étant orientée coaxialement par rapport à la seconde couronne de centrage (24),
(b) un dispositif de transport (14) pour le déplacement dans le tube (28) le long d'un axe longitudinal (L) du dispositif de centrage interne de conduit (10),
**caractérisé par**
(c) un dispositif de rotation (48) permettant de faire tourner le dispositif de centrage interne de conduit (10) autour de son axe longitudinal (L), l'unité de centrage (12) étant mobile indépendamment du dispositif de rotation (48).

2. Dispositif de centrage interne de conduit selon la revendication 1, **caractérisé par**
- un corps de base,
- le dispositif de rotation (48) étant fixé rigidement au corps de base.

3. Dispositif de centrage interne de conduit selon l'une des revendications précédentes, **caractérisé en ce que** le dispositif de transport (14) comporte au moins un rouleau de transport (32),
- dont l'axe de rotation (D₃₂) s'étend transversalement à l'axe longitudinal (L) et
- qui peut être déplacé par voie motrice radialement vers l'intérieur.

4. Dispositif de centrage interne de conduit selon la revendication 2, **caractérisé en ce que** ledit au moins un rouleau de transport (32) est disposé en dessous d'un centre de gravité (S) du dispositif de centrage interne de conduit (10).

5. Dispositif de centrage interne de conduit selon la revendication 2 ou 4, **caractérisé en ce que** ledit au moins un rouleau de transport (32) est mobile radialement par voie pneumatique et/ou hydraulique.

6. Dispositif de centrage interne de conduit selon l'une des revendications précédentes, **caractérisé en ce que** le dispositif de rotation (48) comprend au moins trois, en particulier au moins quatre, rouleaux transversaux (50) dont les axes de rotation (D₅₀) s'étendent le long de l'axe longitudinal (L).

7. Dispositif de centrage interne de conduit selon la revendication 6, **caractérisé en ce que**
(a) les rouleaux transversaux (50) sont montés de manière radialement immobile présentent collectivement un cercle extérieur (K) ; et
(b) (b) l'un au moins dudit au moins un rouleau de transport (32) peut être amené, en particulier par voie motrice, jusque dans
- une position de transport dans laquelle il dépasse au moins partiellement au-delà du cercle extérieur (K), et
- une position de repos dans laquelle il est entièrement disposé à l'intérieur du cercle extérieur (K).

8. Dispositif de centrage interne de conduit selon l'une des revendications précédentes 2 à 7, **caractérisé en ce que** ledit au moins un rouleau de transport (32) est espacé d'une extrémité, avant en direction longitudinale (L), du dispositif de centrage interne de conduit (10), aussi loin que le dispositif de centrage interne de conduit (10) peut être tourné à la main.

9. Dispositif de centrage interne de conduit selon l'une des revendications précédentes, **caractérisé en ce qu'**un centre de gravité (S) du dispositif de centrage interne de conduit (10) dans sa position de fonctionnement se trouve en dessous d'un centre de cercle extérieur (M_{K}) du cercle extérieur (K) du dispositif de transport (14).

10. Procédé de réalisation d'un conduit, comprenant les étapes consistant à :
(i) centrer un premier tube (28) par rapport à un second tube (30) au moyen d'un dispositif de centrage interne de conduit (10) selon l'une des revendications précédentes,
(ii) souder le second tube (30) au premier tube (28),
(iii) déplacer le dispositif de centrage interne de conduit (10) le long de son axe longitudinal (L) au moyen du dispositif de transport (14),
(iv) activer le dispositif de rotation (48),
(v) orienter le dispositif de centrage interne de conduit (10) en le faisant tourner autour de son axe longitudinal (L) ; et
(vi) désactiver le dispositif de rotation (48).

11. Procédé selon la revendication 10, **caractérisé en ce que** la rotation du dispositif de centrage interne de conduit (10) est effectuée à la main.
